Europäisches Patentamt

European Patent Office

Office européen des brevets

(19)

(11) **EP 0 778 288 B1**

(12) **EUROPÄISCHE PATENTSCHRIFT**

(45) Veröffentlichungstag und Bekanntmachung des Hinweises auf die Patenterteilung:
**03.02.1999 Patentblatt 1999/05**

(51) Int. Cl.$^6$: **C08F 2/24**, C08F 36/04

(21) Anmeldenummer: 96118975.0

(22) Anmeldetag: **27.11.1996**

(54) **Verfahren zur Herstellung einer wässrigen Polymerisatdispersion**

Process for preparing an aqueous polymer dispersion

Procédé de préparation d'une dispersion aqueuse de polymères

(84) Benannte Vertragsstaaten:
**AT BE CH DE DK ES FI FR GB GR IE IT LI NL PT SE**

(30) Priorität: **04.12.1995 DE 19545096**

(43) Veröffentlichungstag der Anmeldung:
**11.06.1997 Patentblatt 1997/24**

(73) Patentinhaber:
**BASF AKTIENGESELLSCHAFT**
**67056 Ludwigshafen (DE)**

(72) Erfinder:
• **Claassen, Peter**
**67063 Ludwigshafen (DE)**
• **Graalmann, Onno, Dr.**
**69221 Dossenheim (DE)**
• **Hormuth, Wolfgang Alois**
**67487 St. Martin (DE)**
• **Visseren Marinus**
**6905 AD Zenenaar (NL)**

(56) Entgegenhaltungen:
**EP-A- 0 007 042**    **EP-A- 0 529 695**
**GB-A- 1 179 428**

**Beschreibung**

Vorliegende Erfindung betrifft ein Verfahren zur Herstellung einer wäßrigen Polymerisatdispersion durch radikalische wäßrige Emulsionspolymerisation eines Gemisches von wenigstens eine ethylenisch ungesättigte Gruppe aufweisenden Monomeren, das zu wenigstens 30 % seines Gewichtes aus zwei konjugierte ethylenisch ungesättigte Doppelbindungen aufweisenden Monomeren besteht.

Wäßrige Polymerisatdispersionen (Latices) sind allgemein bekannt. Es handelt sich um fluide Systeme, die als disperse Phase in wäßrigem Dispergiermedium aus mehreren ineinander verschlungenen Polymerisatketten bestehende Polymerisatknäuel (sogenannte Polymerisatteilchen) in disperser Verteilung befindlich enthalten. Der Durchmesser der Polymerisatteilchen liegt im allgemeinen hauptsächlich im Bereich von 10 nm bis 1500 nm.

Im Unterschied zu Polymerisatlösungen bilden wäßrige Polymerisatdispersionen keine thermodynamisch stabilen Systeme. Vielmehr versucht das System, die Grenzfläche Polymerisat/Dispergiermedium durch Vereinigung von kleinen Primärteilchen zu größeren Sekundärteilchen zu verkleinern, was im Zustand der dispersen Verteilung im wäßrigen Medium durch Zusatz von Dispergiermitteln (Substanzen die die Grenzfläche "dispergiertes Polymerisat/wäßriges Dispergiermedium" zu stabilisieren vermögen) für längere Zeit verhindert werden kann.

Das bedingt, daß wäßrige Polymerisatdispersionen das Potential beinhalten, sowohl aus ihrer flüssigen Erscheinungsform als auch aus ihrer aufgeschäumten Form heraus (einen Mindestvolumengehalt an dispergiertem Polymerisat vorausgesetzt) beim Verdampfen des wäßrigen Dispergiermediums und/oder bei kontrollierter Desaktivierung des Dispergiermittels durch teilweises oder vollständiges Verschmelzen der dispergierten Polymerisatteilchen eine zusammenhängende Polymerisatmatrix auszubilden, die im ersten Fall unter günstigen Bedingungen einem transparenten Film und im zweiten Fall einem gelierten System entspricht.

Während sich eine chemische Verknüpfung (insbesondere eine zu dichte) verschiedener Polymerisatketten innerhalb der Polymerisatteilchen bezüglich der Ausbildung vorgenannter Polymerisatmatrix in der Regel eher als nachteilig erweist, ist nach erfolgter Ausbildung der Polymerisatmatrix eine nachträgliche chemische Verknüpfung (Vernetzung) der sie konstituierenden Polymerisatketten zur Einstellung spezifischer mechanischer Eigenschaften (z.B. Elastizität) vielfach erwünscht.

Dieses sich auf den ersten Blick scheinbar widersprechende Anforderungsprofil läßt sich in einfacher Weise dadurch auflösen, daß bei der Herstellung der wäßrigen Polymerisatdispersion, die üblicherweise in an sich bekannter Weise nach der Methode der radikalischen wäßrigen Emulsionspolymerisation (diese Polymerisationsweise ist vielfach vorbeschrieben und dem Fachmann z.B. aus nachfolgender Literatur hinreichend bekannt: Encyclopedia of Polymer Science and Engineering, Vol. 8, S. 659 ff (1987); D.C. Blackly, in High Polymer Latices, Vol. 1, S. 35 ff (1966); H. Warson, The Applications of Synthetic Resin Emulsions, Seite 246 ff, Kapitel 5 (1972); D. Diederich, Chemie in unserer Zeit 24, S. 135 bis 142 (1990); Emulsion Polymerization, Interscience Publishers, New York (1965); DE-A 4 003 422 und Dispersionen synthetischer Hochpolymerer, Teil I, F. Hölscher, Springer Verlag, Berlin (1969)), d.h. im Beisein von Dispergiermittel und radikalischem Polymerisationsinitiator, aus wenigstens eine ethylenisch ungesättigte Gruppe aufweisenden Monomeren unmittelbar in disperser Verteilung befindlich erfolgt, eine signifikante Menge wenigstens eines zwei konjugierte ethylenisch ungesättigte Doppelbindungen aufweisenden Monomeren einpolymerisiert wird (nachfolgend Monomere A genannt). Geeignete Monomere A sind z.B. Butadien, 2-Methyl-butadien (Isopren) und das 2,3-Dimethylbutadien.

Erfolgt eine solche radikalische wäßrige Emulsionspolymerisation unter Mitverwendung von Monomeren A bei nicht zu hohen Temperaturen und gegebenenfalls unter Mitverwendung von üblicherweise das Molekulargewicht regelnden Substanzen wie Mercaptanen (z.B. tert.-Dodecylmercaptan oder n-Dodecylmercaptan), nimmt in der Regel im wesentlichen nur eine der beiden konjugierten ethylenisch ungesättigten Doppelbindungen der Monomeren A an der Polymerisationsreaktion teil.

Erhalten werden so wäßrige Polymerisatdispersionen, deren dispergierte Polymerisatknäuel aus Polymerisatketten bestehen, die einerseits im wesentlichen unvernetzt (d.h. nicht aneinander chemisch gebunden) sind, andererseits aber noch ethylenisch ungesättigte Doppelbindungen aufweisen, die nach erfolgter Ausbildung der gewünschten Polymerisatmatrix durch in an sich bekannter Weise geeignete Vulkanisationssysteme (z.B. auf Schwefelbasis), die üblicherweise vor Ausbildung der Polymerisatmatrix eingearbeitet werden, im Verein mit erhöhter Temperatur aktiviert und unter Ausbildung intramolekularer Vernetzung zielgerichtet zur Reaktion gebracht werden können, wodurch ein anwendungstechnisch gewünschter Vernetzungsgrad eingestellt werden kann.

Von diesen Zusammenhängen wird im Stand der Technik z.B. bei der Herstellung wäßriger Polymerisatdispersionen Gebrauch gemacht, die sich insbesondere zur Herstellung von Tauchartikeln (z.B. Kondome oder Handschuhe) sowie von Schaumgummi eignen (vgl. EP-A 378 380, EP-A 456 333, US-2 880 189, DE-A 2 307 804, DE-AS 1 297 067 und DE-A 1 951 340).

Es werden dabei Gemische von wenigstens eine ethylenisch ungesättigte Gruppe aufweisenden Monomeren, die zu wenigstens 30 % ihres Gewichtes aus zwei konjugierte ethylenisch ungesättigte Doppelbindungen aufweisenden Monomeren bestehen, nach der Methode der radikalischen wäßrigen Emulsionspolymerisation bei im wesentli-

chen konstanter, $\leq$ 50°C betragender Temperatur Tp polymerisiert, wobei gegebenenfalls Molekulargewichtsregler mitverwendet werden (vgl. z.B. US-2 399 017, DE-A 1 951 340 und DE-A 3 406 231).

Die niedrige Polymerisationstemperatur bedingt dabei einen lediglich geringen, bei ansonsten vorgegebenen Polymerisationsbedingungen mit der Polymerisationstemperatur zunehmenden, Vernetzungsgrad, von welchem ausgehend durch spätere gezielte Vulkanisation der erzeugten Polymerisatmatrix ein gezieltes mechanisches Eigenschaftsprofil eingestellt werden kann.

Nachteilig an diesen Verfahren der radikalischen wäßrigen Emulsionspolymerisation des Standes der Technik ist jedoch, daß insbesondere im Fall von Butadien als konjugierte Doppelbindungen aufweisendem Monomerem bei den niedrigen Polymerisationstemperaturen die Polymerisationsgeschwindigkeit nicht zu befriedigen vermag.

Aufgabe der vorliegenden Erfindung war es daher, ein Verfahren zur Herstellung einer wäßrigen Polymerisatdispersion durch radikalische wäßrige Emulsionspolymerisation eines Gemisches von wenigstens eine ethylenisch ungesättigte Gruppe aufweisenden Monomeren, das zu wenigstens 30 % seines Gewichtes aus zwei konjugierte ethylenisch ungesättigte Doppelbindungen aufweisenden Monomeren besteht, zur Verfügung zu stellen, das bei gegebener Zusammensetzung des Polymerisationsansatzes rascher als eine bei im wesentlichen konstanter Temperatur Tp durchgeführte radikalische wäßrige Emulsionspolymerisation erfolgt, jedoch relativ zu einer solchermaßen durchgeführten radikalischen wäßrigen Emulsionspolymerisation im wesentlichen zum selben (Vor-) Vernetzungsgrad führt.

Ein geeignetes Maß für die Vernetzungsdichte ist bei gegebener Monomerenzusammensetzung die transversale kernmagnetische Relaxationszeit der an das Polymerisat chemisch gebundenen Protonen ($^1H T_2$). Sie wurde in dieser Schrift an einer bei 25°C verfilmten und anschließend 2 h bei 80°C getrockneten Probe der jeweiligen wäßrigen Polymerisatdispersion bei einer Probentemperatur von 140°C und einer $^1H$-Resonanzfrequenz von 20 MHz ermittelt. Der Zusammenhang zwischen $^1H T_2$ und der Vernetzungsdichte wird beispielsweise in Macromolecules 1994, 27, 2111-2119 aufgezeigt. Er beruht letztlich darauf, daß die transversale kernmagnetische Relaxationszeit eines ein magnetisches Moment aufweisenden Atomkerns einerseits ein Maß für dessen Beweglichkeit in einem äußeren Magnetfeld ist und eine Vernetzung voneinander verschiedener Polymerisatketten deren Beweglichkeit einschränkt. Je geringer die Beweglichkeit einer Polymerisatkette, d.h., je größer die Vernetzungsdichte, desto kürzer ist die transversale kernmagnetische Relaxationszeit von an diese Polymerisatkette chemisch gebundenen, ein magnetisches Moment aufweisenden, Atomkernen.

Als Lösung der gestellten Aufgabe wurde erfindungsgemäß ein Verfahren zur Herstellung einer wäßrigen Polymerisatdispersion durch radikalische wäßrige Emulsionspolymerisation eines Gemisches von wenigstens eine ethylenisch ungesättigte Gruppe aufweisenden Monomeren, das zu wenigstens 30 % seines Gewichtes aus zwei konjugierte ethylenisch ungesättigte Doppelbindungen aufweisenden Monomeren besteht, gefunden, das dadurch gekennzeichnet ist, daß man

a) das insgesamt zu polymerisierende Monomerengemisch in n Monomerenportionen aufteilt, wobei die ganze Zahl n $\geq$ 2 ist und vorzugsweise 2 $\leq$ n $\leq$ 5 gilt und wobei jede Portion, bezogen auf die Menge des insgesamt zu polymerisierenden Monomerengemisches, vorzugsweise wenigstens ([100/n] -10) mol-% an zu polymerisierenden Monomeren umfaßt,

b) die erste Monomerenportion zusammen mit Dispergiermittel, radikalischem Polymerisationsinitiator und wäßrigem Dispergiermedium ins Polymerisationsgefäß vorlegt und in einer ersten Polymerisationsstufe beginnend bei der Polymerisationsstarttemperatur TP1 mit 0°C $\leq$ TP1 $\leq$ 50°C so polymerisiert, daß die Temperatur des Polymerisationsgemisches bis zu einem Höchstwert TP1H um wenigstens 20°C (vorzugsweise kontinuierlich) zunimmt, ohne 80°C (vorzugsweise ohne 75°C) zu überschreiten und anschließend die Polymerisationstemperatur bis zum Erreichen eines auf die in der ersten Polymerisationsstufe zu polymerisierenden Monomeren bezogenen Polymerisationsumsatzes U1 von wenigstens 60 jedoch höchstens 90 mol-% innerhalb des Temperaturintervalls von TP1H bis TP1H -10°C konstant hält und anschließend das Polymerisationsgemisch auf eine Polymerisationsstarttemperatur TP2 mit TP2 = TP1 $\pm$10°C und 0°C $\leq$ TP2 $\leq$ 50°C abkühlt,

c) die zweite Monomerenportion zusetzt und das danach im Polymerisationsgefäß befindliche Monomerengemisch im Beisein des bereits gebildeten Polymerisats sowie im Beisein von Dispergiermittel und Polymerisationsinitiator in einer zweiten Polymerisationsstufe beginnend bei der Polymerisationsstarttemperatur TP2 so polymerisiert, daß die Temperatur des Polymerisationsgemisches bis zu einem Höchstwert TP2H um wenigstens 20°C (vorzugsweise kontinuierlich) zunimmt ohne 80°C (vorzugsweise ohne 75°C) zu überschreiten und anschließend die Polymerisationstemperatur bis zum Erreichen eines auf die in der zweiten Polymerisationsstufe insgesamt zu polymerisierenden Monomeren bezogenen Polymerisationsumsatzes U2 von wenigstens 60 jedoch höchstens 90 mol-% innerhalb des Temperaturintervalls von TP2H bis TP2H -10°C konstant hält und anschließend auf eine Polymerisationstemperatur TP3 mit TP3 = TP1 $\pm$10°C und 0°C $\leq$TP3 $\leq$ 50°C abkühlt,

d) daran anschließend mit den verbliebenen n-2 Monomerenportionen in n-2 zeitlich aufeinanderfolgenden Polymerisationsstufen in entsprechender Weise wie mit der zweiten Monomerenportion verfährt und

e) am Ende der n-ten Polymerisationsstufe die Polymerisation bei einer im Bereich von 0 bis 50°C liegenden Temperatur gegebenenfalls bis zu einem auf die insgesamt zu polymerisierenden Monomeren bezogenen Polymerisationsgesamtumsatz Uges von $\geq$ 95 mol-% fortsetzt.

Das erfindungsgemäße Verfahren eignet sich z.B. dann, wenn das zu polymerisierende Monomerengemisch als zwei konjugierte ethylenisch ungesättigte Doppelbindungen aufweisende Monomere (Monomere A) wenigstens eines der Monomeren Butadien, 2-Methylbutadien und 2,3-Dimethylbutadien umfaßt.

Das erfindungsgemäß zu polymerisierende Monomerengemisch kann nur aus Monomeren A bestehen, aber auch von Monomeren A verschiedene, wenigstens eine ethylenisch ungesättigte Gruppe aufweisende, Comonomere umfassen. Häufig beträgt der Anteil der Monomeren A am erfindungsgemäß zu polymerisierenden Monomerengemisch 30 bis 90 Gew.-%, oft 40 bis 70 Gew.-% und vielfach 50 bis 60 Gew.-%.

Comonomere, die bei Normaldruck (1 bar) und 25°C eine erhöhte molale Wasserlöslichkeit (> derjenigen von Acrylnitril) aufweisen (Monomere B) sind im erfindungsgemäß zu polymerisierenden Monomerengemisch in der Regel in Mengen von bis zu 10 Gew.-%, oft in Mengen von 3 bis 8 Gew.-% enthalten. Übliche Monomere B sind z.B. 3 bis 6 C-Atome aufweisende $\alpha,\beta$-monoethylenisch ungesättigte Mono- und Dicarbonsäuren wie Acrylsäure, Methacrylsäure, Maleinsäure, Fumarsäure und Itaconsäure, die Salze dieser Carbonsäuren (insbesondere die Alkalimetallsalze und das Ammoniumsalz), die Amide der vorgenannten $\alpha,\beta$-monoethylenisch ungesättigten Carbonsäuren wie z.B. Acrylamid und Methacrylamid, ferner Vinylsulfonsäure und deren wasserlösliche Salze (insbesondere die Alkalimetallsalze und das Ammoniumsalz) sowie N-Vinylpyrrolidon. Während Butadien das bevorzugte Monomere A ist, ist Methacrylsäure das bevorzugte Monomere B.

Der Anteil sonstiger copolymerisierbarer wenigstens eine ethylenisch ungesättigte Gruppe aufweisender Monomere (Monomere C) am erfindungsgemäß zu polymerisierenden Monomerengemisch kann bis zu 70 Gew.-% betragen. Häufig beträgt der Anteil der Monomeren C 10 bis 70, oft 30 bis 60 und vielfach 40 bis 50 Gew.-%. Geeignete Monomere C sind z.B. vinylaromatische Monomere wie Styrol, Vinyltoluol oder o-Chlorstyrol, Acrylnitril, Methacrylnitril und Ester aus Acryl- oder Methacrylsäure mit 1 bis 8 C-Atome aufweisenden Alkanolen, unter denen Styrol, Acrylnitril und Methylmethacrylat besonders bevorzugte Monomere C sind.

D.h., das erfindungsgemäße Verfahren eignet sich zur radikalischen wäßrigen Emulsionspolymerisation von Monomerengemischen bestehend aus

```
30 bis 100 Gew.-%   Monomeren A,
 0 bis  10 Gew.-%   Monomeren B und
 0 bis  70 Gew.-%   Monomeren C.
```

Für das erfindungsgemäße Verfahren geeignete Monomerengemische umfassen damit solche, die bestehen aus

```
30 bis 100 Gew.-%   wenigstens eines Monomeren aus der Gruppe
                    umfassend Butadien, 2-Methyl-butadien und
                    2,3-Dimethylbutadien,
```

```
0 bis  10 Gew.-%   wenigstens eines Monomeren aus der Gruppe
                   umfassend Acrylsäure, Methacrylsäure, Ma-
                   leinsäure, Fumarsäure, Itaconsäure, Acryl-
                   amid und Methacrylamid und
0 bis  70 Gew.-%   wenigstens eines Monomeren aus der Gruppe
                   umfassend Styrol, Acrylnitril und Methyl-
                   methacrylat.
```

Dazu gehören insbesondere Monomerengemische bestehend aus

```
30 bis 100 Gew.-%   Butadien,
 0 bis  10 Gew.-%   Methacrylsäure und
 0 bis  70 Gew.-%   Acrylnitril.
```

Vorgenannte Monomerengemischraster eignen sich auch dann für eine Anwendung des erfindungsgemäßen Verfahrens, wenn die Gewichtsanteile der Monomeren A, B und C wie folgt aufgeteilt sind:

```
30 bis 90 Gew.-%   Monomere A,
 1 bis 10 Gew.-%   Monomere B und
 9 bis 60 Gew.-%   Monomere C.
```

Das erfindungsgemäße Verfahren ist aber auch bei nachfolgender Gewichtsanteilsaufteilung anwendbar:

```
40 bis 70 Gew.-%   Monomere A,
 1 bis 10 Gew.-%   Monomere B und
29 bis 50 Gew.-%   Monomere C.
```

Wie bereits bei den Verfahren des Standes der Technik erfolgt auch beim erfindungsgemäßen Verfahren als weitere Maßnahme zur Begrenzung des Vernetzungsgrades die radikalische wäßrige Emulsionspolymerisation häufig im Beisein von sogenannten Molekulargewichtsreglern (Kettenüberträger) wie z.B. Mercaptanen (Alkanthiolen), die mit Vorteil 3 bis 15 C-Atome aufweisen. Vorzugsweise wird erfindungsgemäß tert.-Dodecylmercaptan oder n-Dodecylmercaptan als Molekulargewichtsregler eingesetzt. In typischer Weise erfolgt in diesen Fällen die radikalische wäßrige Emulsionspolymerisation in jeder Polymerisationsstufe des erfindungsgemäßen Verfahrens im Beisein von 0,1 bis 3 Gew.%, häufig 0,5 bis 1,5 Gew.-%, bezogen auf die Menge der in der jeweiligen Polymerisationsstufe zu polymerisierenden Monomeren, an solchen Molekulargewichtsreglern.

Zur Gewährleistung der Stabilität der dispersen Verteilung der erzeugten Polymerisatteilchen während und nach Beendigung der radikalischen wäßrigen Emulsionspolymerisation kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate, Vinylpyrrolidon enthaltende Copolymerisate oder Polykondensate aus Naphthalinsulfonsäure und Formaldehyd deren zahlenmittleres, auf atomaren Wasserstoff bezogenes, relatives Molekulargewicht mit Vorteil 4000 bis 8000 beträgt. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Da die Monomeren B infolge ihrer Polarität im Unterschied zu den Monomeren A und C bereits eine signifikante Löslichkeit im wäßrigen Polymerisationsmedium aufweisen, wird häufig dann eine Kombination aus Emulgatoren und Schutzkolloiden angewendet, wenn als Ergebnis des erfindungsgemäßen Verfahrens wäßrige Polymerisatdispersionen angestrebt werden, deren dispergierte Polymerisatteilchen chemisch möglichst einheitlich sind.

Als Emulgatoren, die im Unterschied zu den Schutzkolloiden als grenzflächenaktive Substanzen Micellen zu bilden vermögen, werden mit Vorteil solche eingesetzt, deren relative Molekulargewichte im Unterschied zu den Schutzkolloiden üblicherweise unter 2000, meist unter 1000 liegen. Sie können sowohl anionischer, kationischer als auch nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Fettalkohole (EO-Grad: 3 bis 100, Alkylrest: $C_8$ bis $C_{18}$), sowie Alkali- und Ammoniumsalze von Alkylsulfaten (Alkylrest: $C_8$ bis $C_{16}$), von Schwefelsäurehalbestern ethoxy-lierter Alkanole (EO-Grad: 1 bis 70, Alkylrest: $C_{12}$ bis $C_{18}$) und ethoxylierter Alkylphenole (EO-Grad: 3 bis 100, Alkyl-rest: $C_4$ bis $C_{12}$), von Alkylsulfonsäuren (Alkylrest: $C_{12}$ bis $C_{18}$), von Arylsulfonsäuren und von Alkylarylsulfonsäuren (Alkylrest: $C_9$ bis $C_{18}$). Ferner sind geeignete Emulgatoren die Alkali- und Ammoniumsalze von Alkylsulfaten (Alkylrest: $C_{10}$ bis $C_{18}$) und von Aryl- sowie Alkylarylsulfaten (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Da das Grundprinzip der beiden wichtigsten Verfahren zur Latex-Schaumgummiherstellung - des Dunlop- und des Talalay-Prozesses - darin besteht, daß eine bei einem pH-Wert >7 stabile, geschäumte wäßrige Polymerisatdispersion durch Erniedrigen des pH-Wertes zum Gelieren gebracht wird, bilden die Alkali (insbesondere Natrium- und Kalium-)- und Ammoniumsalze von $C_8$- bis $C_{18}$-Fettsäuren (gesättigte und ungesättigte) sowie von disproportionierten Harzsäuren aus Kolophonium (Dresinate) besonders bevorzugte Emulgatoren zur Stabilisierung der erfindungsgemäß herzustellenden wäßrigen Polymerisatdispersionen. Unter diesen sind die Kalium-, Natrium- und Ammoniumsalze der Palmitinsäure, Ölsäure, Stearinsäure, Linolsäure und Linolensäure besonders bevorzugt. Generell ist eine anionische Stabilisierung bevorzugt.

In der Regel weist jede Polymerisationsstufe des erfindungsgemäßen Verfahrens 0,5 bis 10, meist 1 bis 5 Gew.-% an Dispergiermittel, bezogen auf die Menge der in der jeweiligen Polymerisationsstufe zu polymerisierenden Monomeren, auf.

Als radikalische Polymerisationsinitiatoren kommen für die erfindungsgemäße radikalische wäßrige Emulsionspolymerisation prinzipiell alle diejenigen in Betracht, die in der Lage sind, bei Temperaturen $\leq$ 50°C eine radikali-sche wäßrige Emulsionspolymerisation auszulösen. Es kann sich dabei sowohl um Peroxide als auch um Azoverbindungen handeln. Vorzugsweise werden kombinierte Systeme, die aus wenigstens einem Reduktionsmittel und wenigstens einem Peroxid und/oder Hydroperoxid zusammengesetzt sind, eingesetzt, da die Reduktionsmittel die Radikalbildung aktivieren und so einen Start der erfindungsgemäßen radikalischen wäßrigen Emulsionspolymerisation bei niederen Temperaturen ermöglichen.

Als geeignete Reduktionsmittel kommen beispielsweise Ascorbinsäure, Acetonbisulfit, das Natriumsalz der Hydroxymethansulfinsäure, Natriumsulfit, Natriumhydrogensulfit oder Natriumdithionit in Betracht. Ganz besonders bevorzugt umfassen die vorgenannten kombinierten (Redoxinitiator-)Systeme zusätzlich eine geringe Menge einer im Polymerisationsmedium löslichen Metallverbindung, deren metallische Komponente in mehreren Wertigkeitsstufen auftreten kann. Ein Beispiel für solche Metallverbindungen sind Eisen(II)salze wie Eisen(II)sulfat. Anstelle eines wasserlöslichen Eisen(II)-salzes wird häufig auch eine Kombination aus wasserlöslichen Fe/V-Salzen benutzt. Derartige, eine solche Metallverbindung enthaltende, Redoxinitiatorsysteme sind insofern von Vorteil, als sie den Start der erfindungsgemäßen radikalischen wäßrigen Emulsionspolymerisation bei noch tieferen Temperaturen ermöglichen. Beispiele für derartige Redoxinitiatorsysteme sind Ascorbinsäure/Eisen(II) sulfat/Wasserstoffperoxid oder Natriumdithionit + Natriumformaldehydsulfoxylat/Eisen(II)sulfat/Para-Menthanhydroperoxid oder Diisopropylbenzolhydroperoxid oder Cumolhydroperoxid. Häufig wird derartigen, eine Metaliverbindung enthaltenden Redoxinitiatorsystemen noch eine geringe Menge eines Chelatbildners zugesetzt, um zu gewährleisten, daß sich die metallische Komponente in Lösung befindet und dem Reaktionssystem nicht z.B. durch eine Fällungsreaktion entzogen wird. Als Beispiel für einen solchen Chelatbildner seien die Natriumsalze der Ethylendiamintetraessigsäure genannt. Häufig wird die metallische Komponente bereits unmittelbar als Chelatkomplex zugesetzt.

Bezogen auf die zu polymerisierenden Monomeren beträgt die zu verwendende Initiatormenge in jeder Polymerisationsstufe des erfindungsgemäßen Verfahrens in der Regel 0,01 bis 5, meist 0,01 bis 1 Gew.-%. In der Regel wird erfindungsgemäß unter Inertgasatmosphäre polymerisiert.

Erfindungsgemäß ist die Menge der insgesamt zu polymerisierenden Monomeren in n Monomerenportionen aufzuteilen, wobei n z.B. die Werte 2, 3, 4 oder 5 annehmen kann. Selbstverständlich kann n auch größer als 5 sein, doch ist dies für eine großtechnische Produktion nicht zweckmäßig. Zweckmäßigerweise beträgt n 2 oder 3.

In vorteilhafter Weise beträgt der auf die in der jeweiligen Polymerisationsstufe zu polymerisierenden Monomeren (diese Gesamtmenge setzt sich zusammen aus der Menge der in der vorgehenden Polymerisationsstufe unpolymerisiert verbliebenen Monomeren sowie der Menge der für diese Polymerisationsstufe frisch zugesetzten Monomeren) bezogene, in der jeweiligen Polymerisationsstufe anzustrebende Polymerisationsumsatz U 70 bis 85 mol-%.

Ferner umfaßt das erfindungsgemäße Polymerisationsverfahren insbesondere diejenigen Ausführungsformen, bei denen TP1 0°C bis 20°C beträgt und die Höchstwerte TPnH in den jeweiligen Polymerisationsstufen 50 bis 75°C oder 40 bis 50°C betragen.

In der Regel wird man das erfindungsgemäße Polymerisationsverfahren so gestalten, daß die Zusammensetzung der in den einzelnen Polymerisationsstufen zu polymerisierenden Monomerengemische im wesentlichen die selbe ist. D.h., in einfacher Weise vermischt man die verschiedenen Monomeren miteinander und teilt das Gemisch in die erforderlichen n Portionen auf. Selbstverständlich können die in den einzelnen Polymerisationsstufen zu polymerisierenden Monomerengemische auch verschiedene Zusammensetzungen aufweisen.

Werden z.B. Monomere mit einpolymerisiert, deren nach Beendigung der erfindungsgemäßen radikalischen wäßrigen Emulsionspolymerisation verbliebene Restmonomere aus dem Produktgemisch schwer zu entfernen sind (z.B. Acrylnitril), kann es zweckmäßig sein, in der letzten Polymerisationsstufe den Relativanteil von als Restmonomere relativ leicht entfernbaren Monomerenarten (z.B. Butadien) zu erhöhen. Auch kann der Anteil an Molekulargewichtsregler von Stufe zu Stufe bei Bedarf variabel gestaltet werden.

Die in den einzelnen Polymerisationsstufen erfindungsgemäß geforderte Zunahme der Polymerisationstemperatur läßt sich in einfacher Weise mittels einer quasi adiabatischen Reaktionsführung (die frei werdende Polymerisationswärme bleibt im Polymerisationsgemisch) bis zum Erreichen der jeweiligen Höchsttemperatur erzielen. Wird bis zum Erreichen der gewünschten Höchsttemperatur bereits der gewünschte Polymerisationsumsatz (wenigstens 60 mol-%, höchstens 90 mol-%) erzielt, kann das Polymerisationsgemisch unmittelbar darauf bereits auf TP1 $\pm$10°C abgekühlt werden. Andernfalls hält man die Polymerisationshöchsttemperatur erfindungsgemäß bis zum Erreichen des gewünschten Umsatzes noch einige Zeit im wesentlichen aufrecht.

Normalerweise wird die erfindungsgemäße radikalische wäßrige Emulsionspolymerisation in den einzelnen Polymerisationsstufen so durchgeführt, daß man jeweils die Gesamtmenge des für die jeweilige Stufe vorgesehenen Polymerisationsansatzes (einschließlich gegebenenfalls mitzuverwendender Molekulargewichtsregler) abzüglich des Radikalbildners ins Polymerisationsgefäß vorlegt, die Starttemperatur einstellt und anschließend den Radikalbildner (in der Regel auf einmal) ins Polymerisationsgefäß zusetzt und polymerisiert. Bei der quasi adiabatischen Polymerisationsweise nimmt mit der Polymerisationstemperatur dabei in der Regel auch der Arbeitsdruck zu. Üblicherweise beträgt der Arbeitsdruck 1 bis 15, häufig 1 bis 6 und vielfach 1 bis 3 atm. Oft ist es zweckmäßig den Temperaturanstieg durch externe Temperaturregelung dann abzubrechen, wenn der Arbeitsdruck seinen bei der quasi adiabatischen Arbeitsweise natürlichen Maximalwert erreicht hat.

Vorzugsweise wird man bereits der ersten Polymerisationsstufe die überwiegende Menge ($\geq$ 50 %) (in der Regel jedoch mindestens 10 %) des insgesamt erforderlichen wäßrigen Dispergiermediums zusetzen, da dies die Kontaktfläche (Wärmeaustauschfläche) mit dem Polymerisationsgefäß erhöht. Die zu polymerisierenden Monomeren werden dem Polymerisationsgefäß in der jeweiligen Polymerisationsstufe vorzugsweise in im wäßrigen Medium voremulgierter Form zugesetzt.

In der ersten Polymerisationsstufe kann bei Bedarf ein Saatlatex zugesetzt werden (normalerweise nicht mehr als 1 Gew.-% bezogen auf die in dieser Stufe zu polymerisierenden Monomeren). Diese Maßnahme gewährleistet in der Regel einen kontrollierteren Polymerisationsverlauf. Diesbezüglich bietet sich z.B. die Anwendung eines Polystyrolsaatlatex an, dessen Polymerisatteilchendurchmesser im Bereich um 30 nm liegen.

Über die Dispergiermittelmenge läßt sich die Endgröße der Polymerisatteilchen der nach dem erfindungsgemäßen Verfahren erhältlichen wäßrigen Polymerisatdispersion beeinflussen. Häufig werden gewichtsmittlere Durchmesser $\bar{d}_w$ von 50 bis 200 nm, vielfach 50 bis 150 nm eingestellt. Der Feststoffvolumenanteil liegt in der Regel bei 30 bis 60 Vol.-%, meist bei 40 bis 50 Vol.-%. Während der Polymerisation kann in der jeweiligen Polymerisationsstufe zum Zweck des Erreichens des gewünschten Polymerisationsumsatzes sowie zum Zweck der zusätzlichen Stabilisierung der wäßrigen Polymerisatdispersion selbstverständlich weiterer Radikalbildner und/oder Dispergiermittel zugesetzt werden.

Ferner können zur Stabilisierung des pH-Wertes des wäßrigen Dispergiermediums während der Emulsionspolymerisation Puffer wie Alkaliphosphat zugesetzt werden. Ein Zusatz geringer Mengen starker Elektrolyte wie Kaliumsulfat, Kaliumchlorid und/oder Natriumsulfat erleichtert in an sich bekannter Weise die Einstellung der gewünschten Polymerisattellchendurchmesser durch kontrollierenden Einfluß in der Polymerisatteilchenbildungsphase.

Die gegebenenfalls am Ende der n-ten Polymerisationsstufe bis zu einem Polymerisationsgesamtumsatz von $\geq$ 95 mol-% durchzuführende Fortsetzung des erfindungsgemäßen Verfahrens (dient primär dem Zweck der Restmonomerenverringerung) wird vorzugsweise bei der Temperatur TP1 $\pm$10°C durchgeführt. Bei Bedarf wird dabei weiterer Polymerisationsinitiator zugegeben. Als solcher wird vorzugsweise das Addukt von Aceton an das Hydrogensulfitanion in Kombination mit tert.-Butylhydroperoxid (sowie gegebenenfalls einem Übergangsmetallion) angewendet (vgl. DE-A 4 419 518 und DE-A 4 435 423), da dieses Initiatorsystem nur geringe Nachvernetzung bedingt.

Zur Beendigung der erfindungsgemäßen radikalischen wäßrigen Emulsionspolymerisation wird der Polymerisationsumsatz in der Regel durch Zusatz von Polymerisationsinhibitoren wie Diethylhydroxylamin gestoppt und dann noch nicht umgesetzte Monomere in an sich bekannter Weise durch Desodorieren (vorzugsweise Strippen und/oder Wasserdampfdestillation) entfernt.

Wie bereits erwähnt, eignen sich die nach dem erfindungsgemäßen Verfahren hergestellten wäßrigen Polymerisatdispersionen in ihrer Eigenart als Äquivalente zu den synthetischen Kaltkautschuken insbesondere zur Herstellung von Tauchartikeln (Kondome, Handschuhe) sowie von Schaumgummi auf Latexbasis (z.B. Matratzen, Teppichrücken). Die diesbezüglichen Herstellverfahren sind dem Fachmann an sich bekannt.

Häufig werden den erfindungsgemäß erhältlichen wäßrigen Polymerisatdispersionen vorab einer solchen Verwendung noch Alterungsschutzmittel wie Antioxidantien oder Baktericide zugesetzt. Beispiele hierfür sind Naugawhite®, Wingstay® und Proxel® XL2.

Vergleichsbeispiele VD und Beispiele BD zum erfindungsgemäßen Verfahren (die Polymerisation erfolgte in allen Fällen unter N$_2$-Atmosphäre sowie unter Zusatz von Na-dithionit, das hier als Sauerstoffänger fungiert)

VD1: In ein Polymerisationsgefäß (gerührter Druckreaktor aus V2A Stahl) wurde ein Gemisch bestehend aus

```
438     g  Wasser,
 76     g  15 gew.-%ige wäßrige Lösung des Na-Salzes der
           Dodecylbenzolsulfonsäure,
  8     g  Tamol® NN 4501 (45 gew.-%ige wäßrige Lösung
           des Natriumsalzes eines Naphthalinsulfonsäure-
           Formaldehyd-Kondensats (zahlenmittleres rela-
           tives Molekulargewicht: 6500)),
  0,8   g  Natriumsulfat,
  3     g  tert.-Dodecylmercaptan,
 22,8   g  Methacrylsäure (6 Gew.-%)
148,2   g  Acrylnitril (39 Gew.-%) und
209     g  Butadien (55 Gew.-%)
```

vorgelegt und auf 10°C gekühlt.

Anschließend wurde unter Aufrechterhaltung der 10°C zunächst ein Gemisch aus

```
3      g  Wasser und
0,1    g  Na-dithionit
```

und danach ein Gemisch aus

```
0,05   g  Na-Salz der Hydroxymethansulfinsäure,
0,015  g  Sequestrene® Na-Fe (gemischtes Na-Fe-Salz der
          Ethylendiamintetraessigsäure) und
3      g  Wasser
```

jeweils auf einmal zusetzt.

Danach wurde eine Lösung von 0,20 g einer 80 gew.-%igen wäßrigen Cumolhydroperoxidlösung in 6 g Wasser auf einmal zugesetzt und anschließend unter Beibehalt der 10°C polymerisiert. Nach 11 h betrug der Polymerisationsumsatz 50 mol-%. Nach 24 h wurde die Polymerisation durch Zusatz eines Gemisches aus

```
6      g  Wasser,
0,2    g  Diethylhydroxylamin,
0,3    g  Natriumsalz der Hydroxymethansulfinsäure und
8,7    g  25 gew.-%ige wäßrige Ammoniaklösung
```

bei einem Polymerisationsumsatz von 95 mol-% gestoppt. Die verbliebenen Monomeren wurden durch Strippen mittels Wasserdampf weitgehend entfernt.

Die Verfilmung der resultierenden wäßrigen Polymerisatdispersion wies einen $^1H T_2$-Wert von 3,8 ms auf.
VD2:Wie VD1, die Polymerisation wurde jedoch bei einer Temperatur von 70°C durchgeführt. Der Polymerisationsumsatz von 95 mol-% wurde bereits nach 6 h erreicht. Die verbliebenen Monomeren wurden durch Strippen mittels Wasserdampf weitgehend entfernt. Die Verfilmung der resultierenden wäßrigen Polymerisatdispersion wies einen $^1H T_2$-Wert von 0,3 ms auf.
VD3:In ein Polymerisationsgefäß (gerührter Druckreaktor aus V2A Stahl) wurde ein Gemisch aus

```
441    g  Wasser,
 76    g  15 gew.-%ige wäßrige Lösung des Na-Salzes von
          sekundärer Alkansulfonsäure (C13-/C17-Gemisch),
  8    g  Tamol NN 4501,
  0,8  g  Natriumsulfat,
  4,8  g  tert.-Dodecylmercaptan,
 22,8  g  Methacrylsäure (6 Gew.-%),
167,2  g  Acrylnitril (44 Gew.-%) und
190    g  Butadien (50 Gew.-%)
```

vorgelegt und auf 10°C gekühlt.

Anschließend wurde unter Aufrechterhaltung der 10°C zunächst ein Gemisch aus

```
3      g  Wasser und
0,1    g  Na-dithionit
```

und danach ein Gemisch aus

```
0,05   g  Na-Salz der Hydroxymethansulfinsäure,
0,015  g  Sequestrene Na-Fe und
3      g  Wasser
```

jeweilsauf einmal zugesetzt. Danach wurde eine Lösung von 0,20 g einer 80 gew.-%igen wäßrigen Cumolhydroperoxidlösung in 6 g Wasser auf einmal zugesetzt und anschließend unter Beibehalt der 10°C polymerisiert.

Nach 24 h wurde die Polymerisation durch Zusatz eines Gemisches aus

```
6      g  Wasser,
0,2    g  Diethylhydroxylamin,
0,3    g  Natriumsalz der Hydroxymethansulfinsäure und
8,7    g  25 gew.-%ige wäßrige Ammoniaklösung
```

bei einem Polymerisationsumsatz von 95 mol-% gestoppt. Die verbliebenen Monomeren wurden durch Strippen mittels Wasserdampf weitgehend entfernt.

Die Verfilmung der resultierenden wäßrigen Polymerisatdispersion wies einen $^1H T_2$-Wert von 4,2 ms auf.

BD1: In ein Polymerisationsgefäß (gerührter Druckreaktor aus V2A Stahl) wurde ein Gemisch aus

```
436    g  Wasser,
  0,8  g  Natriumsulfat,
  8,4  g  Tamol NN 4501,
 53,3  g  15 gew.-%ige wäßrige Lösung des Na-Salzes der
          Dodecylbenzolsulfonsäure,
  1,6  g  tert.-Dodecylmercaptan,
  0,02 g  Sequestrene Fe-Na,
 12    g  Methacrylsäure (3 Gew.-%),
 78    g  Acrylnitril (19,5 Gew.-%) und


110    g  Butadien (27,5 Gew.-%)
```

vorgelegt und auf 10°C gekühlt.

Anschließend wurde unter Aufrechterhaltung der 10°C zunächst ein Gemisch aus

```
4,3    g  Wasser und
0,1    g  Na-Dithionit
```

und danach ein Gemisch aus

```
0,04   g  Na-Salz der Hydroxymethansulfinsäure und
5      g  Wasser
```

jeweils auf einmal zugesetzt.

Danach wurde eine Lösung aus 10 g Wasser, 0,08 g 15 gew.-%ige wäßrige Lösung des Na-Salzes der Dodecylbenzolsulfonsäure und 0,1 g einer 80 gew.-%igen wäßrigen Cumolhydroperoxidlösung auf einmal zugesetzt und danach quasi adiabatisch polymerisiert, bis ein kontinuierlicher Anstieg der Temperatur des Reaktionsgemisches auf 50°C erreicht war. Dieser war nach 1,5 h der Fall. Anschließend wurde unter Aufrechterhaltung der 50°C noch 2 h weiterpolymerisiert. Danach war ein Umsatz von 70 mol-% erreicht.

Dann wurde das Polymerisationsgemisch durch indirekte Kühlung innerhalb von 10 min auf 10°C abgekühlt.

Anschließend wurde dem Polymerisationsgefäß ein Gemisch aus

```
110    g  Butadien (27,5 Gew.-%),
 78    g  Acrylnitril (19,5 Gew.-%),
 12    g  Methacrylsäure (3 Gew.-%),
 25,6  g  15 gew.-%ige wäßrige Lösung des Na-Salzes der
          Dodecylbenzolsulfonsäure und
  1,6  g  tert.-Dodecylmercaptan
```

auf einmal zugesetzt. Dann wurden 0,04 g Na-Salz der Hydroxymethansulfinsäure gelöst in 9 g Wasser auf einmal zugesetzt (10°C).

Schließlich wurde eine Lösung aus 68 g Wasser, 0,1 g 15 gew.-%ige wäßrige Lösung des Na-Salzes der Dodecylbenzolsulfonsäure und 0,1 g einer 80 gew.-%igen wäßrigen Cumolhydroperoxidlösung auf einmal zugegeben und danach quasi adiabatisch polymerisiert, bis ein kontinuierlicher Anstieg der Temperatur des Reaktionsgemisches auf 72°C erreicht war. Zu diesem Zeitpunkt (1,5 h nach Beginn der zweiten Polymerisationsstufe) betrug der Polymerisationsumsatz in dieser zweiten Polymerisationsstufe, U2, bezogen auf die Gesamtmenge der in dieser Stufe zu polymerisierenden Monomeren, 69 mol-%. Der zu diesem Zeitpunkt auf die Menge der insgesamt zu polymerisierenden Monomeren bezogene Polymerisationsumsatz betrug 80 mol-%. Dann wurde das Polymerisationsgemisch durch indirekte Kühlung innerhalb von 10 min auf 10°C gekühlt und unter Aufrechterhaltung dieser Temperatur noch 5 h gerührt (Nachpolymerisation). Dann wurde zum Abbruch der Polymerisationsreaktion ein Gemisch aus 5 g Wasser, 0,24 g Diethylhydroxylamin und 8 g 25 gew.-%igem wäßrigem Ammoniak zugesetzt. Der auf die Gesamtmenge der zu polymerisierenden Monomeren bezogene Polymerisationsumsatz betrug an dieser Stelle $\geq$ 95 mol-%. Die verbliebenen Monomeren wurden durch Strippen mittels Wasserdampf weitgehend entfernt. Die Verfilmung der resultierenden wäßrigen Polymerisatdispersion wies einen $^{1}H T_2$-Wert von 3,7 ms auf. D.h. in weniger als der halben Polymerisationsdauer wurde ein Produkt gleicher Qualität wie bei VD1 erhalten.

BD2: In ein Polymerisationsgefäß (gerührter Druckreaktor aus V2A Stahl) wurde ein Gemisch aus

```
436     g  Wasser,
  0,8   g  Natriumsulfat,
  8,4   g  Tamol NN 4501,
 53,3   g  15 gew.-%ige wäßrige Lösung des Na-Salzes von
           sekundärer Alkansulfonsäure (C13-/C17-Gemisch),
  1,6   g  tert.-Dodecylmercaptan,
  0,02  g  Sequestrene Fe-Na,
 12     g  Methacrylsäure (3 Gew.-%),
 88     g  Acrylnitril (22 Gew.-%) und
100     g  Butadien (25 Gew.-%)
```

vorgelegt und auf 10°C gekühlt.

Anschließend wurde unter Aufrechterhaltung der 10°C ein Gemisch aus

```
4,3   g  Wasser und
0,04  g  Na-Salz der Hydroxymethansulfinsäure
```

und danach ein Gemisch aus

```
5,3  g  Wasser und
0,1  g  Na-Ditionit
```

auf einmal zugesetzt.

Danach wurde eine Lösung aus 10 g Wasser, 0,08 g 15 gew.-%ige wäßrige Lösung des Na-Salzes der Dodecylbenzolsulfonsäure und 0,1 g einer 80 gew.-%igen wäßrigen Cumolhydroperoxidlösung auf einmal zugesetzt und danach quasi adiabatisch polymerisiert, bis ein kontinuierlicher Anstieg der Temperatur des Reaktionsgemisches auf 71°C erreicht war. Zu diesem Zeitpunkt (1,5 h nach Polymerisationsbeginn) betrug der Polymerisationsumsatz in dieser ersten Polymerisationsstufe, U1, 85 mol-%.

Dann wurde das Reaktionsgemisch durch indirekte Kühlung innerhalb von 10 min auf 10°C abgekühlt.

Anschließend wurde dem Polymerisationsgefäß ein Gemisch aus

| 100 | g | Butadien (25 Gew.-%), |
|---|---|---|
| 88 | g | Acrylnitril (22 Gew.-%), |
| 12 | g | Methacrylsäure (3 Gew.-%), |
| 25,6 | g | 15 gew.-%ige wäßrige Lösung des Na-Salzes von sekundärer Alkansulfonsäure (C$_{13}$-/C$_{17}$-Gemisch) und |
| 1,6 | g | tert.-Dodecylmercaptan |

auf einmal zugesetzt. Dann wurden 0,04 g Na-Salz der Hydroxymethansulfinsäure gelöst in 9 g Wasser auf einmal zugesetzt (10°C).

Schließlich wurde eine Lösung aus 68 g Wasser, 0,1 g 15 gew.-%ige wäßrige Lösung des Na-Salzes von sekundärer Alkansulfonsäure (C$_{13}$-/C$_{17}$-Gemisch) und 0,1 g einer 80 gew.-%igen wäßrigen Cumolhydroperoxidlösung auf einmal zugegeben und danach quasi adiabatisch polymerisiert, bis ein kontinuierlicher Anstieg der Temperatur des Reaktionsgemisches auf 70°C erreicht war. Zu diesem Zeitpunkt (1,5 h nach Beginn der zweiten Polymerisationsstufe) betrug der Polymerisationsumsatz in dieser zweiten Polymerisationsstufe, U2, bezogen auf die Gesamtmenge der in dieser Stufe zu polymerisierenden Monomeren, 74 mol-%. Der zu diesem Zeitpunkt auf die Menge der insgesamt zu polymerisierenden Monomeren bezogene Polymerisationsumsatz betrug 85 mol-%. Dann wurde das Polymerisationsgemisch durch indirekte Kühlung innerhalb von 10 min auf 10°C abgekühlt und unter Aufrechterhaltung dieser Temperatur noch 4 h gerührt (Nachpolymerisation). Dann wurde zum Abbruch der Polymerisationsreaktion ein Gemisch aus 5 g Wasser, 0,24 g Diethylhydroxylamin und 8 g 25 gew.-%igem wäßrigem Ammoniak zugesetzt. Der auf die Gesamtmenge der zu polymerisierenden Monomeren bezogene Polymerisationsumsatz betrug an dieser Stelle ≥ 95 mol-%. Die verbliebenen Monomeren wurden durch Strippen mittels Wasserdampf weitgehend entfernt. Die Verfilmung der resultierenden wäßrigen Polymerisatdispersion wies einen $^{1H}$T$_2$-Wert von 4,4 ms auf. D.h., in weniger als der halben Polymerisationsdauer wurde ein Produkt gleicher Qualität wie bei VD3 erhalten.

BD3: Wie BD1. Der Temperaturanstieg in der ersten Polymerisationsstufe erfolgte jedoch bis zu einem Wert von 51°C (Dauer: 1 h). Anschließend wurde diese Temperatur noch 2 h aufrechterhalten (U1 zu diesem Zeitpunkt: 80 mol-%) und erst danach auf 10°C abgekühlt.

In entsprechender Weise erfolgte der Temperaturanstieg in der zweiten Polymerisationsstufe lediglich bis zu einem Wert von 54°C (Dauer: 1 h). Anschließend wurde diese Temperatur noch 2 h aufrechterhalten (U2 zu diesem Zeitpunkt: 83 mol-%, Uges zu diesem Zeitpunkt: 90 mol-%). Nach Abkühlen auf 10°C wurde noch 1 h bei dieser Temperatur gerührt. Anschließend lag Uges bei einem Wert ≥ 95 mol-%. Nach Strippen der verbliebenen Monomeren wurde ein $^{1H}$T$_2$-Wert der Verfilmung von 4,2 ms ermittelt.

BD4: Wie BD1. Der Temperaturanstieg in der ersten Polymerisationsstufe erfolgte jedoch lediglich bis zu einem Wert von 35°C (Dauer: 0,5 h). Anschließend wurde diese Temperatur noch 3 h aufrechterhalten (U1 zu diesem Zeitpunkt: 85 mol-%) und erst danach auf 10°C abgekühlt.

In entsprechender Weise erfolgte der Temperaturanstieg in der zweiten Polymerisationsstufe lediglich bis zu einem Wert von 30°C (Dauer: 0,5 h). Anschließend wurde diese Temperatur noch 3 h aufrechterhalten (U2 zu diesem Zeitpunkt: 60 mol%, Uges zu diesem Zeitpunkt: 57,5 mol-%). Nach Abkühlen auf 10°C wurde noch 3 h bei dieser Temperatur gerührt. Anschließend lag Uges bei einem Wert ≥ 95 mol-%. Nach Strippen der verbliebenen Monomeren wurde ein $^{1H}$T$_2$-Wert der Verfilmung von 4,1 ms ermittelt.

BD5: Wie BD1. TP1 betrug jedoch 20°C. Ferner erfolgte der Temperaturanstieg in der ersten Polymerisationsstufe lediglich bis zu einem Wert von 42°C (Dauer: 1 h). Anschließend wurde diese Temperatur noch 2 h aufrechterhalten (U1 zu diesem Zeitpunkt: 80 mol-%) und erst danach auf 20°C abgekühlt. In entsprechender Weise erfolgte der Temperaturanstieg in der zweiten Polymerisationsstufe lediglich bis zu einem Wert von 42°C (Dauer: 1 h). Anschließend wurde diese Temperatur noch 2 h aufrechterhalten (U2 zu diesem Zeitpunkt: 83 mol-%, Uges zu diesem Zeitpunkt: 90 mol-%).

Nach Abkühlen auf 20°C wurde noch 2 h bei dieser Temperatur gerührt. Anschließend lag Uges bei einem Wert ≥ 95 mol-%. Nach Strippen der verbliebenen Monomeren wurde ein $^{1H}$T$_2$-Wert der Verfilmung von 3,8 ms ermittelt.

**Patentansprüche**

1. Verfahren zur Herstellung einer wäßrigen Polymerisatdispersion durch radikalische wäßrige Emulsionspolymerisation eines Gemisches von wenigstens eine ethylenisch ungesättigte Gruppe aufweisenden Monomeren, das zu wenigstens 30 % seines Gewichtes aus zwei konjugierte ethylenisch ungesättigte Doppelbindungen aufweisenden Monomeren A besteht, dadurch gekennzeichnet, daß man

   a) das insgesamt zu polymerisierende Monomerengemisch in n Monomerenportionen aufteilt, wobei $n \geq 2$ gilt,

   b) die erste Monomerenportion zusammen mit Dispergiermittel, radikalischem Polymerisationsinitiator und wäßrigem Dispergiermedium ins Polymerisationsgefäß vorlegt und in einer ersten Polymerisationsstufe beginnend bei der Polymerisationsstartemperatur TP1 mit $0°C \leq TP1 \leq 50°C$ so polymerisiert, daß die Tempratur des Polymerisationsgemisches bis zu einem Höchstwert TP1H um wenigstens 20°C zunimmt ohne 80°C zu überschreiten, danach die Polymerisationstemperatur bis zum Erreichen eines auf die in der ersten Polymerisationsstufe zu polymerisierenden Monomeren bezogenen Polymerisationsumsatzes U1 von wenigstens 60 jedoch höchstens 90 mol-% innerhalb des Temperaturintervalls von TP1H bis TP1H -10°C konstant hält und anschließend das Polymerisationsgemisch auf eine Polymerisationsstarttemperatur TP2 mit $TP2 = TP1 \pm 10°C$ und $0°C \leq TP2 \leq 50°C$ abkühlt,

   c) die zweite Monomerenportion zusetzt und das danach im Polymerisationsgefäß befindliche Monomerengemisch im Beisein des bereits gebildeten Polymerisats sowie im Beisein von Dispergiermittel und Polymerisationsinitiator in einer zweiten Polymerisationsstufe beginnend bei der Polymerisationsstartemperatur TP2 so polymerisiert, daß die Temperatur des Polymerisationsgemisches bis zu einem Höchstwert TP2H um wenigstens 20°C zunimmt ohne 80°C zu überschreiten, danach die Polymerisationstemperatur bis zum Erreichen eines auf die in der zweiten Polymerisationsstufe insgesamt zu polymerisierenden Monomeren bezogenen Polymerisationsumsatzes U2 von wenigstens 60 jedoch höchstens 90 mol-% innerhalb des Temperaturintervalls von TP2H bis TP2H -10°C konstant hält und anschließend das Polymerisationsgemisch auf eine Polymerisationstemperatur TP3 mit $TP3 = TP1 \pm 10°C$ und $0°C \leq TP2 \leq 50°C$ abkühlt,

   d) daran anschließend mit den verbliebenen n-2 Monomerenportionen in n-2 zeitlich aufeinanderfolgenden Polymerisationsstufen in entsprechender Weise wie mit der zweiten Monomerenportion verfährt und

   e) am Ende der n-ten Polymerisationsstufe die Polymerisation bei einer im Bereich von 0 bis 50°C liegenden Temperatur gegebenenfalls bis zu einem auf die insgesamt zu polymerisierenden Monomeren bezogenen Polymerisationsgesamtumsatz Uges von $\geq 95$ mol-% fortsetzt.

2. Verfahren nach Anspruch 1, dadurch gekennzeichnet, daß $2 \leq n \leq 5$ gilt.

3. Verfahren nach Anspruch 1 oder 2, dadurch gekennzeichnet, daß die Temperaturzunahme vom Startwert bis zum Höchstwert in den einzelnen Polymerisationsstufen kontinuierlich erfolgt.

4. Verfahren nach Anspruch 1 bis 3, dadurch gekennzeichnet, daß das zu polymerisierende Monomerengemisch besteht aus

```
30 bis 100 Gew.-%    wenigstens eines Monomeren A,
 0 bis  10 Gew.-%    eines oder mehrere wenigstens eine
                     ethylenisch ungesättigte Gruppe auf-
                     weisende Monomere, deren molale Lös-
                     lichkeit in Wasser bei 1 bar und 25°C
                     > der molalen Löslichkeit von Acryl-
                     nitril in Wasser bei 1 bar und 25°C
                     ist (Monomere B), und
 0 bis  70 Gew.-%    eines oder mehrere von den Monomeren
                     A, B verschiedene wenigstens eine
                     ethylenisch ungesättigte Gruppe auf-
                     weisende copolymerisierbare Monomere
                     (Monomere C).
```

5. Verfahren nach Anspruch 1 bis 4, dadurch gekennzeichnet, daß das zu polymerisierende Monomerengemisch als Monomeres A Butadien umfaßt.

6. Verfahren nach Anspruch 1 bis 5, dadurch gekennzeichnet, daß das zu polymerisierende Monomerengemisch besteht aus

```
30 bis 90 Gew.-%    Butadien,
 1 bis 10 Gew.-%    Methacrylsäure und
 9 bis 60 Gew.-%    Acrylnitril.
```

7. Verfahren nach Anspruch 1 bis 6, dadurch gekennzeichnet, daß die Polymerisation in den einzelnen Polymerisationsstufen im Beisein von Molekulargewichtsregler erfolgt.

8. Verfahren nach Anspruch 1 bis 7, dadurch gekennzeichnet, daß die Polymerisation in den einzelnen Polymerisationsstufen im Beisein eines Gemisches bestehend aus wenigstens einem Schutzkolloid und wenigstens einem Emulgator als Dispergiermittel erfolgt.

9. Verfahren nach Anspruch 1 bis 8, dadurch gekennzeichnet, daß die Polymerisation in den einzelnen Polymerisationsstufen durch ein radikalisches Redoxinitiatorsystem initiiert wird.

10. Verfahren nach Anspruch 1 bis 9, dadurch gekennzeichnet, daß der auf die in der jeweiligen Polymerisationsstufe zu polymerisierenden Monomeren bezogene, in der jeweiligen Polymerisationsstufe erzielte Polymerisationsumsatz 70 bis 85 mol-% beträgt.

11. Verfahren nach Anspruch 1 bis 10, dadurch gekennzeichnet, daß TP1 0°C bis 20°C beträgt und die Höchstwerte der Polymerisationstemperatur in den verschiedenen Polymerisationsstufen 40 bis 50°C betragen.

12. Verfahren nach Anspruch 1 bis 11, dadurch gekennzeichnet, daß die Zusammensetzung der in den einzelnen Polymerisationsstufen zu polymerisierenden Monomerengemische im wesentlichen die selbe ist.

13. Verfahren nach Anspruch 1 bis 12, dadurch gekennzeichnet, daß man die radikalische wäßrige Emulsionspolymerisation in den einzelnen Polymerisationsstufen so durchführt, daß man jeweils die Gesamtmenge des für die jeweilige Stufe vorgesehenen Polymerisationsansatzes abzüglich des Radikalbildners ins Polymerisationsgefäß vorlegt, die Starttemperatur einstellt, anschließend den Radikalbildner ins Polymerisationsgefäß zusetzt und polymerisiert.

**14.** Verfahren nach Anspruch 1 bis 13, dadurch gekennzeichnet, daß man am Ende der n-ten Polymerisationsstufe die Polymerisation bei einer Temperatur TP1 ±10°C bis zu einem Polymerisationsgesamtumsatz von ≥ 95 mol-% fortsetzt.

**15.** Verfahren nach Anspruch 1 bis 14, dadurch gekennzeichnet, daß jede der n Monomerenportionen ([100/n]-10) mol-% des insgesamt zu polymerisierenden Monomerengemisches umfaßt.

**Claims**

**1.** A process for the preparation of an aqueous polymer dispersion by free radical aqueous emulsion polymerization of a mixture of monomers having at least one ethylenically unsaturated group, which comprises at least 30% by weight of monomers A having two conjugated ethylenically unsaturated double bonds, wherein

a) the total amount of the monomer mixture to be polymerized is divided into n monomer portions, n being ≥ 2,

b) the first monomer portion is initially taken together with dispersant, free radical polymerization initiator and aqueous dispersing medium in the polymerization vessel and is polymerized in a first polymerization stage, beginning at the initial polymerization temperature TP1, where 0°C ≤ TP1 ≤ 50°C, so that the temperature of the polymerization mixture increases by at least 20°C to a maximum temperature TP1H, without exceeding 80°C and
the polymerization temperature is then kept constant within the temperature interval from TP1H to TP1H -10°C until a polymerization conversion U1 of at least 60 but not more than 90 mol %, based on the monomers to be polymerized in the first polymerization stage, is reached and the polymerization mixture is then cooled to an initial polymerization temperature TP2, where TP2 = TP1 ±10°C and 0°C ≤ TP2 ≤ 50°C,

c) the second monomer portion is added and the monomer mixture then present in the polymerization vessel is polymerized in the presence of the polymer already formed and in the presence of a dispersant and polymerization initiator in a second polymerization stage, beginning at the initial polymerization temperature TP2, so that the temperature of the polymerization mixture increases by at least 20°C to a maximum value TP2H without exceeding 80°C and
the polymerization temperature is then kept constant within the temperature interval from TP2H to TP2H -10°C until a polymerization conversion U2 of at least 60 but not more than 90 mol %, based on the total amount of monomers to be polymerized in the second polymerization stage, is reached and the polymerization mixture is then cooled to a polymerization temperature TP3, where TP3 = TP1 ±10°C and 0°C ≤ TP2 ≤ 50°C,

d) the procedure is then continued with the remaining n-2 monomer portions in n-2 successive polymerization stages in a manner corresponding to that for the second monomer portion and

e) at the end of the n th polymerization stage, the polymerization is continued at a temperature of from 0 to 50°C, if required up to a total polymerization conversion Utot of ≥ 95 mol %, based on the total amount of monomers to be polymerized.

**2.** A process as claimed in claim 1, wherein 2 ≤ n ≤ 5.

**3.** A process as claimed in claim 1 or 2, wherein the temperature increase from the initial value to the maximum value in the individual polymerization stages takes place continuously.

**4.** A process as claimed in any of claims 1 to 3, wherein the monomer mixture to be polymerized consists of

| from 30 to 100% by weight | of at least one monomer A, |
| from 0 to 10% by weight | of one or more monomers which have at least one ethylenically unsaturated group and whose molal solubility in water at 1 bar and 25°C > the molal solubility of acrylonitrile in water at 1 bar and 25°C (monomers B) and |
| from 0 to 70% by weight | of one or more copolymerizable monomers which differ from the monomers A and B and have at least one ethylenically unsaturated group (monomers C). |

5. A process as claimed in any of claims 1 to 4, wherein the monomer mixture to be polymerized comprises butadiene as monomer A.

6. A process as claimed in any of claims 1 to 5, wherein the monomer mixture to be polymerized consists of

| from 30 to 90% by weight of | butadiene, |
| from 1 to 10% by weight of | methacrylic acid and |
| from 9 to 60% by weight of | acrylonitrile. |

7. A process as claimed in any of claims 1 to 6, wherein the polymerization in the individual polymerization stages is carried out in the presence of molecular weight regulators.

8. A process as claimed in any of claims 1 to 7, wherein the polymerization in the individual polymerization stages is carried out in the presence of a mixture comprising at least one protective colloid and at least one emulsifier as dispersants.

9. A process as claimed in any of claims 1 to 8, wherein the polymerization in the individual polymerization stages is initiated by a free radical redox initiator system.

10. A process as claimed in any of claims 1 to 9, wherein the polymerization conversion achieved in the respective polymerization stage and based on the monomers to be polymerized in the respective polymerization stage is from 70 to 85 mol %.

11. A process as claimed in any of claims 1 to 10, wherein TP1 is from 0°C to 20°C and the maximum values of the polymerization temperature in the various polymerization stages are from 40 to 50°C.

**12.** A process as claimed in any of claims 1 to 11, wherein the composition of the monomer mixtures to be polymerized in the individual polymerization stages is essentially the same.

**13.** A process as claimed in any of claims 1 to 12, wherein the free radical aqueous emulsion polymerization is carried out in the individual polymerization stages in such a way that in each case the total amount of the polymerization batch intended for the respective stage, without the free radical initiator, is initially taken in the polymerization vessel, the initiation temperature is established, then the free radical initiator is added to the polymerization vessel and polymerization is effected.

**14.** A process as claimed in any of claims 1 to 13, wherein, at the end of the n th polymerization stage, the polymerization is continued at TP1 ±10°C up to a total polymerization conversion of ≥ 95 mol %.

**15.** A process as claimed in any of claims 1 to 14, wherein each of the n monomer portions comprises ([100/n]-10) mol % of the total amount of monomer mixure to be polymerized.

## Revendications

**1.** Procédé pour la préparation d'une dispersion polymère aqueuse par polymérisation radicalaire en émulsion aqueuse d'un mélange de monomères présentant au moins un groupe à insaturation éthylénique, qui est constitué, jusqu'à concurrence d'au moins 30% de son poids, par deux monomères A présentant deux liaisons doubles conjuguées à insaturation éthylénique, caractérisé en ce que

a) on répartit le mélange total de monomères à polymériser en n portions de monomères, n ≥ 2,

b) on dépose au préalable la première portion de monomères conjointement avec un agent de mise en dispersion, un initiateur de la polymérisation par voie radicalaire et un milieu de dispersion aqueux, dans le récipient de polymérisation, et on polymérise dans une première étape de polymérisation en commençant à la température de départ de la polymérisation TP1 conformément à 0°C ≤ TP1 ≤ 50°C de telle sorte que la température du mélange de polymérisation augmente jusqu'à une valeur maximale TP1H d'au moins 20°C sans dépasser 80°C; ensuite, on maintient constante la température de polymérisation jusqu'à ce que l'on atteigne une transformation par polymérisation U1 rapportée aux monomères à polymériser dans la première étape de polymérisation, d'au moins 60, mais au maximum de 90 moles %, dans un intervalle de température de TP1H à TP1H -10°C; et ensuite, on refroidit le mélange de polymérisation à une température de départ de la polymérisation TP2 conformément à TP2 = TP1 ±10°C et 0°C ≤ TP2 ≤ 50°C,

c) on ajoute la seconde portion de monomères et on polymérise ensuite le mélange de monomères se trouvant dans le récipient de polymérisation, en présence du polymère déjà formé, ainsi qu'en présence de l'agent de mise en dispersion et de l'initiateur de la polymérisation, dans une deuxième étape de polymérisation, en commençant à la température de départ de la polymérisation TP2 de telle sorte que la température du mélange de polymérisation augmente jusqu'à une valeur maximale TP2H d'au moins 20°C sans dépasser 80°C; ensuite on maintient la température de polymérisation constante jusqu'à ce que l'on atteigne une transformation par polymérisation U2 rapportée à la quantité globale des monomères à polymériser dans la deuxième étape de polymérisation, d'au moins 60, mais au maximum de 90 moles %, dans l'intervalle de température de TP2H à TP2H -10°C; ensuite, on refroidit le mélange de polymérisation à une température de polymérisation TP3 conformément à TP3 = TP1 ± 10°C et 0°C ≤ TP2 ≤ 50°C,

d) on procède immédiatement après avec les portions de monomères n-2 restantes dans n-2 étapes de polymérisation qui se suivent dans le temps, d'une manière correspondante à celle de la deuxième portion de monomères, et

e) au terme de la énième étape de polymérisation, on poursuit la polymérisaton à une température se situant dans le domaine de 0 à 50°C, éventuellement jusqu'à ce que l'on obtienne une transformation globale par polymérisation Ug, rapportée à la quantité globale des monomères à polymériser, de ≥ 95 moles %.

**2.** Procédé selon la revendication 1, caractérisé en ce qu'on respecte l'équation 2 ≤ n ≤ 5.

**3.** Procédé selon la revendication 1 ou 2, caractérisé en ce que l'augmentation de la température depuis la valeur de départ jusqu'à la valeur maximale, dans les étapes individuelles de la polymérisation, a lieu en continu.

**4.** Procédé selon les revendications 1 à 3, caractérisé en ce que le mélange de monomères à polymériser est constitué par

à concurrence de 30 à 100% en poids, au moins un monomère A,

à concurrence de 0 à 10% en poids, un ou plusieurs monomères présentant au moins un groupe à insaturation éthylénique, dont la solubilité molale dans l'eau sous une pression de 1 bar et à une température de 25°C est supérieure à la solubilité molale de l'acrylonitrile dans de l'eau sous une pression de 1 bar et à une température de 25°C (monomère B), et

à concurrence de 0 à 70% en poids, un ou plusieurs monomères copolymérisables différents des monomères A, B présentant au moins un groupe à insaturation éthylénique (monomère C).

**5.** Procédé selon les revendications 1 à 4, caractérisé en ce que le mélange de monomères à polymériser comprend, à titre de monomères A, du butadiène.

**6.** Procédé selon les revendications 1 à 5, caractérisé en ce que le mélange de monomères à polymériser est constitué par,

à concurrence de 30 à 90% en poids, du butadiène,

à concurrence de 1 à 10% en poids, de l'acide méthacrylique et

à concurrence de 9 à 60% en poids, de l'acrylonitrile.

**7.** Procédé selon les revendications 1 à 6, caractérisé en ce qu'on effectue la polymérisation dans les étapes de polymérisation indviduelles en présence d'un régulateur du poids moléculaire.

**8.** Procédé selon les revendications 1 à 7, caractérisé en ce qu'on effectue la polymérisation dans les étapes de polymérisation individuelles en présence d'un mélange constitué par au moins un colloïde protecteur et par au moins un émulsifiant à titre d'agent de mise en dispersion.

**9.** Procédé selon les revendications 1 à 8, caractérisé en ce qu'on déclenche la polymérisation dans les étapes de polymérisation individuelles via un système d'initiateur redox de type radicalaire.

**10.** Procédé selon les revendications 1 à 9, caractérisé en ce que la transformation par polymérisation obtenue dans les étapes de polymérisation respectives, rapportée aux monomères à polymériser dans les étapes de polymérisation respectives, s'élève de 70 à 85 moles %.

**11.** Procédé selon les revendications 1 à 10, caractérisé en ce que TP1 s'élève de 0°C à 20°C et les valeurs maximales de la température de polymérisation dans les différentes étapes de polymérisation s'élève de 40 à 50°C.

**12.** Procédé selon les revendications 1 à 11, caractérisé en ce que la composition des mélanges de monomères à polymériser dans les étapes individuelles de polymérisation est essentiellement la même.

**13.** Procédé selon les revendications 1 à 12, caractérisé en ce qu'on effectue la polymérisation en émulsion aqueuse de type radicalaire dans les étapes individuelles de polymérisation de telle sorte que l'on dépose au préalable dans le récipient de polymérisation la quantité totale de la charge de polymérisation prévue pour l'étape respective, déduction faite du formateur de radicaux; on règle la température de départ; ensuite, on ajoute le formateur de radicaux dans le récipient de polymérisation et on polymérise.

**14.** Procédé selon les revendications 1 à 13, caractérisé en ce qu'on prolonge la polymérisation au terme de la énième étape de polymérisation à une température TP1 ±10°C jusqu'à une transformation totale par polymérisation de ≥ 95 moles %.

**15.** Procédé selon les revendications 1 à 14, caractérisé en ce que chacune des n portions de monomères comprend ([100/n]-10) mole % du mélange de monomères globalement à polymériser.